# EUROPEAN PATENT APPLICATION

(11) **EP 4 807 657 A1**
(43) Date of publication of application: **16.09.2026**
(21) Application number: 24931876.7
(22) Date of filing: 28.03.2024
(51) Int. Cl.: G06Q 50/04

(54) **MANUFACTURING PROCESS MANAGEMENT SYSTEM, MANUFACTURING PROCESS MANAGEMENT METHOD, AND PROGRAM**

(71) Applicant: HONDA MOTOR CO., LTD., Tokyo 105-8404 (JP)
(72) Inventor: KIMURA, Toru, 63073 Offenbach am Main (DE); KOPP, Martin, 63073 Offenbach am Main (DE); KOEBEL, Christian, 63073 Offenbach am Main (DE)
(74) Representative: Kiwit, Benedikt
(86) International application number: PCT/JP2024/012772
(87) International publication number: WO 2025/203471

(57) **Abstract**

An aspect of the present invention is a manufacturing process management system which is a system that manages manufacturing processes by a plurality of manufacturers, the manufacturing process management system including a plurality of information processing portions corresponding to the plurality of manufacturers, wherein each of the plurality of information processing portions generates first data relating to a specification of a component manufactured by a corresponding manufacturer, generates second data by encrypting the first data with a secret key of the manufacturer, generates verification data including the first data, the second data, and a decentralized identifier of the manufacturer, supplies the verification data to an information processing portion of a next manufacturing process, and is capable of providing the verification data supplied from an information processing portion of a previous manufacturing process to a third party.

## Description

### TECHNICAL FIELD

The present invention relates to a manufacturing process management system, a manufacturing process management method, and a program.

### BACKGROUND ART

In the related art, a system has been disclosed which calculates a material constitution amount of a specific product and creates emission data in which a carbon dioxide gas amount per unit amount emitted when each material is burned is recorded, thereby making it possible to understand a carbon dioxide gas emission amount with respect to the specific product (for example, refer to Patent Document 1). Patent Document 1 discloses that, when there is a plurality of component manufacturers of the specific product, each component manufacturer accesses each recording data, inputs the carbon dioxide gas emission amount, and a final manufacturer (for example, an OEM: Original Equipment Manufacturer or the like) integrates the carbon dioxide gas emission amount for each material and calculates the carbon dioxide emission amount for the entire product.

### Related Art Documents

### Patent Documents

Patent Document 1: Japanese Unexamined Patent Application, First Publication No. 2005-293064

### SUMMARY OF INVENTION

### PROBLEM TO BE SOLVED BY THE INVENTION

However, in the technique of the related art, it is necessary for the final manufacturer of the specific product to collectively receive the emission data of the component manufacturer, and there may be cases in which the burden on the final manufacturer is increased.

The present invention has been made in consideration of such circumstances, and an object of the present invention is to provide a manufacturing process management system, a manufacturing process management method, and a program that can accurately and easily certify, for a third party, that with respect to manufacturing processes of a component (including a component as a final product) by a plurality of manufacturers, each process is correctly performed based on the result of the previous process.

### MEANS FOR SOLVING THE PROBLEM

A manufacturing process management system, a manufacturing process management method, and a program according to this invention employ the following configurations.
(1): A manufacturing process management system according to an embodiment of this invention is a system that manages manufacturing processes by a plurality of manufacturers, the manufacturing process management system including a plurality of information processing portions corresponding to the plurality of manufacturers, wherein each of the plurality of information processing portions generates first data relating to a specification of a component manufactured by a corresponding manufacturer, generates second data by encrypting the first data with a secret key of the manufacturer, generates verification data including the first data, the second data, and a decentralized identifier of the manufacturer, supplies the verification data to an information processing portion of a next manufacturing process, and is capable of providing the verification data supplied from an information processing portion of a previous manufacturing process to a third party.
(2): In the aspect (1), when the verification data is supplied from the previous manufacturing process, each of the plurality of information processing portions generates verification data relating to an own manufacturing process based on the first data included in the verification data.
(3): In the aspect (1) or (2), when generating the verification data relating to the own manufacturing process, each of the plurality of information processing portions causes the second data included in the verification data supplied from the previous manufacturing process to be included in the first data of the verification data generated relating to the own manufacturing process.
(4): In any one of the aspects (1) to (3), each of the plurality of information processing portions generates the second data by encrypting a hash value obtained by hashing the first data with the secret key.
(5): In any one of the aspects (1) to (4), the first data is a value relating to an environmental load generated by manufacturing the component.
(6): In any one of the aspects (1) to (5), the verification data is used as management information of a battery passport which is an effort to ensure transparency of information disclosure relating to a battery, and the first data indicates an integration value of carbon dioxide emission amounts of respective processes in a manufacturing process of the battery.
(7): A manufacturing process management method according to another aspect of this invention is a method of managing manufacturing processes by a plurality of manufacturers, wherein in a manufacturing process management system including a plurality of information processing portions corresponding to the plurality of manufacturers, each of the plurality of information processing portions generates first data relating to a specification of a component manufactured by a corresponding manufacturer, generates second data by encrypting the first data with a secret key of the manufacturer, generates verification data including the first data, the second data, and a decentralized identifier of the manufacturer, supplies the verification data to an information processing portion of a next manufacturing process, and provides the verification data supplied from an information processing portion of a previous manufacturing process to a third party.
(8): A program according to another aspect of this invention is a program in a manufacturing process management system that manages manufacturing processes by a plurality of manufacturers, the manufacturing process management system including a plurality of information processing portions corresponding to the plurality of manufacturers, the program causing each of the plurality of information processing portions to generate first data relating to a specification of a component manufactured by a corresponding manufacturer, generate second data by encrypting the first data with a secret key of the manufacturer, generate verification data including the first data, the second data, and a decentralized identifier of the manufacturer, supply the verification data to an information processing portion of a next manufacturing process, and provide the verification data supplied from an information processing portion of a previous manufacturing process to a third party.

### EFFECT OF THE INVENTION

According to the aspects (1) to (8), it is possible to accurately and easily certify, for a third party, that with respect to a manufacturing process of a component (including a component as a final product) by a plurality of manufacturers, each process is correctly performed based on the result of the previous process.

More specifically, according to the aspects (1), (7), and (8), the third party can confirm that the specification data presented related to the final product or the component by each manufacturer is not falsified by verifying a VC (Verifiable Credential) presented from the final manufacturer.

Further, according to the aspect (2), it becomes possible for the third party to understand the specification as the entire manufacturing process with respect to a manufacturing process of manufacturing a new component using a component of the previous process.

Further, according to the aspect (3), since the second data according to each manufacturing process is accumulated in the first data of the verification data, the third party can understand the specification as the entire manufacturing process and can verify that the specification information is correctly transmitted to the subsequent process in each manufacturing process.

Further, according to the aspect (4), the third party acquiring the verification data can verify the validity of the verification data by comparing the hash value obtained by decrypting the second data with the public key with the hash value obtained by hashing the first data.

Further, in the related art, when manufacturing an own component by using a component provided from a manufacturer of the previous process, each manufacturer acquires, from the manufacturer of the previous process, information required for calculating a value (hereinafter, referred to as an "environmental load value") relating to an environmental load that occurs by manufacturing the own component. For example, a CFP (Carbon Foot Print) is an example of the environmental load value. However, the manufacturer on the side of providing the information would like to avoid disclosing much specification information only for the purpose of understanding the environmental load value. On the other hand, according to the aspects (5) and (6), since the environmental load value itself is transmitted from the manufacturer of the previous process to the manufacturer of the subsequent process, it becomes unnecessary for each manufacturer to disclose more specification information than necessary. Thereby, it is expected that the environmental load value is actively disclosed by each manufacturer, and accordingly, it is possible to contribute to the implementation of the battery passport which is an effort to ensure the transparency of information disclosure relating to a battery.

### BRIEF DESCRIPTION OF DRAWINGS

[FIG. 1] FIG. 1 is a schematic view showing verifiable credentials.
[FIG. 2] FIG. 2 is a view showing an example of a configuration of an information processing system of an embodiment.
[FIG. 3] FIG. 3 is a view showing an example of a configuration of an information processing apparatus of the embodiment.
[FIG. 4] FIG. 4 is view showing an image (part 1) representing the way in which the emission amount of CO2 in each manufacturing process is integrated and is linked to a final manufacturer by the information processing system of the embodiment.
[FIG. 5] FIG. 5 is view showing an image (part 2) representing the way in which the emission amount of CO2 in each manufacturing process is integrated and is linked to a final manufacturer by the information processing system of the embodiment.
[FIG. 6] FIG. 6 is a flowchart showing an example of a flow of a process in which the information processing apparatus of the embodiment generates certification information with respect to a corresponding manufacturing process.

### DESCRIPTION OF EMBODIMENTS

Hereinafter, embodiments of a manufacturing process management system, a manufacturing process management method, and a program of the present invention will be described below with reference to the drawings.

### <Outline>

The information processing system of an embodiment is a system in which, in a product manufacturing process of manufacturing a product in a plurality of processes, information (hereinafter, referred to as "certification information") for certifying that each process is performed based on execution results of respective previous processes is generated. In the following embodiment, as an example of the certification information, information (hereinafter, referred to as "CO2 emission information") indicating an integration value of the amount of carbon dioxide emitted in each process is described. Each process of the product manufacturing process totals the emission amount of carbon dioxide in the own process to the emission amounts of carbon dioxide in the previous processes and supplies the total to the subsequent process, and thereby, the CO2 emission information is generated. In this case, certification information created by the final process of the product manufacturing process becomes the CO2 emission information of the entire product manufacturing process. Further, the information processing system of the embodiment generates the certification information (CO2 emission information) as a verifiable credential and can thereby ensure that the certification information is not falsified in the process of the product manufacturing. For example, by ensuring that the certification information is not falsified, the product manufacturer can certify that an actual result of the previous process is correctly linked to the subsequent process in the product manufacturing process. For example, according to the CO2 emission information, a product manufacturer can assert that with respect to the CO2 emitted in the manufacturing process of the product, an accurate emission amount is presented. Here, the CO2 emission information is described as an example of the certification information, but the matter certified by the certification information (that is, the matter performed based on the execution results of the previous processes in each process) may be a matter other than the integration of the CO2 emissions.

### <Details>

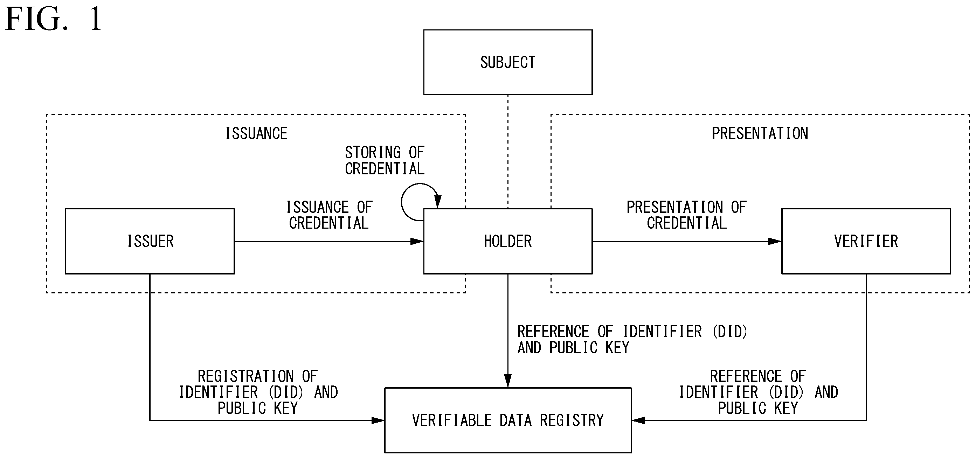

FIG. 1 is a view schematically showing verifiable credentials. The verifiable credentials are credentials that are digitized such that the credentials can be mechanically verified. The credentials mean information used for authentication for performing an access control in information security and correspond to generally called credential information, authentication information, or the like. Examples of the credentials include a user ID and a password, biometric authentication information, a certificate, and the like. The verifiable credentials are different from an image data obtained by simply scanning a ticket surface and make it possible to mechanically verify "who the issuer is" and "whether there is no falsification in the contents" by using a digital signature technique. The specifications, the data model, and the like of the verifiable credentials are standardized by the W3C (World Wide Web Consortium).

As shown in FIG. 1, in the mechanism of the verifiable credentials, in general, an issuer, a holder, a verifier, a subject, and a verifiable data registry are assumed as characters. The issuer is one who issues a credential for the subject, and the holder is one who owns the issued credential. The credential is information in which the issuer claims that the subject has a specific attribute. The credential may be information indicating a specific attribute which the issuer claims about the subject. In general, the holder is often the subject, but the holder and the subject may be different from each other.

The verifier is one who receives presentation of the credential from the holder and verifies the validity of the credential. The verifiable data registry is a storage region of data used by the issuer, the holder, and the verifier. Information required for verification such as an identifier of the issuer, a public key, and expiration information of the credential is recorded in the verifiable data registry. The verifiable data registry is constituted as a region that can be referred to by anyone but cannot be arbitrarily rewritten. Due to the nature, the verifiable data registry is often implemented using blockchain.

The issuer applies a digital signature to target information to be certified with respect to the subject by using a secret key of the issuer and thereby converts the target information into a credential. Since a public key corresponding to the secret key is required for verification of the credential, the issuer registers the public key in the verifiable data registry in association with a DID (Decentralized Identifier) of the issuer. Thereby, the verifier can acquire the public key of the credential from the verifiable data registry by specifying the DID of the issuer corresponding to the credential. The verifiable data registry uses the DID for the management of the public key and thereby guarantees the association between the issuer and the public key in a decentralized manner without relying on a reliable third party such as a certificate authority.

The information processing system in the present embodiment generates the certification information (CO2 emission information) of CO2 emissions in the product manufacturing process based on the mechanism of the verifiable credentials described above.

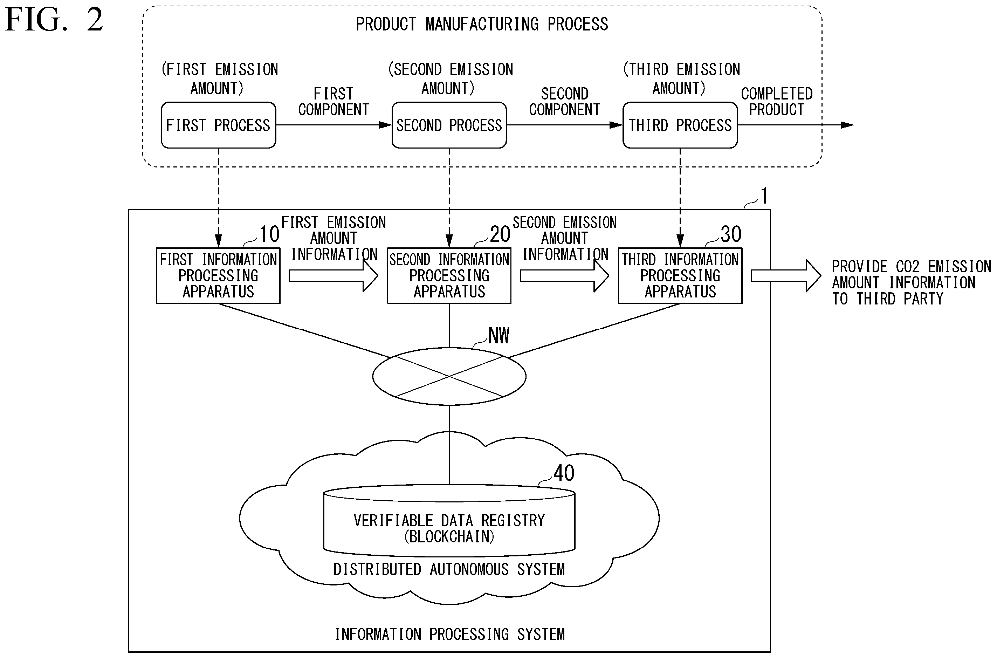

FIG. 2 is a view showing an example of the configuration of an information processing system 1 of the present embodiment. In FIG. 2, for simplicity, the case in which the product manufacturing process as a process target of the information processing system 1 is constituted of three processes which are a first process, a second process, and a third process is described. Further, here, for simplicity, it is assumed that in the second process, a second component is manufactured by using a first component manufactured in the first process, and in the third process, the product is completed by using the second component manufactured in the second process; however, the before-and-after relationship of the respective processes included in the product manufacturing process may be at least a before-and-after relationship on the generation of the CO2 emission information and is not necessarily a before-and-after relationship on the manufacturing process. The completed product may include a component other than the first component and the second component.

In the example of FIG. 2, the information processing system 1 includes a first information processing apparatus 10 corresponding to the first process, a second information processing apparatus 20 corresponding to the second process, a third information processing apparatus 30 corresponding to the third process, and a verifiable data registry 40. Here, for simplicity, it is assumed that the first information processing apparatus 10, the second information processing apparatus 20, and the third information processing apparatus 30 are capable of communicating with each other via a network NW and are capable of accessing the verifiable data registry 40 via the network NW. The network NW may include an arbitrary WAN (Wide Area Network) such as the Internet, a cellular network, or an exclusive line, may include an arbitrary LAN (Local Area Network), or may include both of them. The first information processing apparatus 10, the second information processing apparatus 20, and the third information processing apparatus 30 are not necessarily capable of communicating with each other as long as the first information processing apparatus 10, the second information processing apparatus 20, and the third information processing apparatus 30 can perform information cooperation with each other. For example, the information cooperation among the first information processing apparatus 10, the second information processing apparatus 20, and the third information processing apparatus 30 may be manually realized via a storage medium that is attachable to and detachable from each information processing apparatus.

The first information processing apparatus 10 generates information (hereinafter, referred to as "first emission amount information") for linking a CO2 emission amount in the manufacturing process (first process) of the first component to the second process, and transmits the information to the second information processing apparatus 20. The second information processing apparatus 20 generates information (hereinafter, referred to as "second emission amount information") for linking an integration value of the CO2 emission amounts in and before the manufacturing process (second process) of the second component to the third process, and transmits the information to the third information processing apparatus 30. That is, the second emission amount information is information that links the total of the CO2 emission amount (first emission amount) in the first process and the CO2 emission amount (second emission amount) in the second process to the third process.

The third information processing apparatus 30 generates the CO2 emission information on the basis of an integration value of the CO2 emission amount in and before the manufacturing process (third process) of a completed product. That is, the CO2 emission information certifies the total emission amount of CO2 in the product manufacturing process obtained by totaling the CO2 emission amount (first emission amount) in the first process, the CO2 emission amount (second emission amount) in the second process, and the CO2 emission amount (third emission amount) in the third process. The third information processing apparatus 30 may provide the generated CO2 emission information to a third party such as an auditor.

In the present embodiment, the first emission information, the second emission information, and the CO2 emission information are generated by a similar procedure by a method described later. In that context, the first information processing apparatus 10, the second information processing apparatus 20, and the third information processing apparatus 30 can be a functionally equivalent apparatus. Therefore, in the following, the first information processing apparatus 10, the second information processing apparatus 20, and the third information processing apparatus 30 are collectively referred to as an "information processing apparatus 100" when it is not necessary to particularly distinguish the apparatuses.

### [Configuration of information processing apparatus]

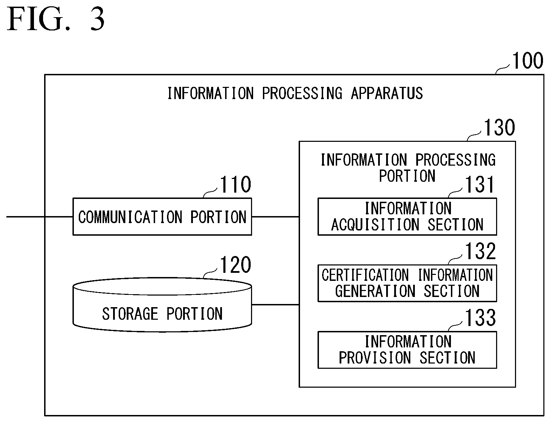

FIG. 3 is a view showing an example of the configuration of the information processing apparatus 100 of the present embodiment. The information processing apparatus 100 includes, for example, a communication portion 110, a storage portion 120, and an information processing portion 130. The information processing portion 130 is implemented, for example, by a hardware processor such as a CPU (Central Processing Unit) executing a program (software). Some or all of these constituent elements may be realized by hardware (a circuit unit; including circuitry) such as an LSI (Large Scale Integration), an ASIC (Application Specific Integrated Circuit), an FPGA (Field-Programmable Gate Array), or a GPU (Graphics Processing Unit) or may be realized by cooperation of software and hardware. The program may be stored in a storage device (a storage device including a non-transient storage medium) such as an HDD (Hard Disk Drive) or a flash memory in advance or may be stored in a detachable storage medium (non-transient storage medium) such as a DVD or a CD-ROM and be installed by mounting the storage medium on a drive device.

The communication portion 110 is a communication interface for connecting to the network NW. The communication portion 110 is, for example, a network interface card.

The storage portion 120 is an HDD, a flash memory, a RAM (Random Access Memory), or the like. The storage portion 120 is used as a storage region for various information required for the operation of the information processing apparatus 100 such as a program or setting information. The storage portion 120 may be used as a storage region of information generated by the information processing apparatus 100, temporary data of the processing executed by the information processing apparatus 100, and the like.

The information processing portion 130 generates certification information relating to a corresponding process (hereinafter, referred to as an "own process") of the own apparatus in the product manufacturing process. More specifically, the information processing portion 130 generates certification information relating to the own process on the basis of the certification information supplied from the previous process and supplies the certification information to the subsequent process. The information processing portion 130 includes, for example, an information acquisition section 131, a certification information generation section 132, and an information provision section 133.

The information acquisition section 131 acquires the certification information (first emission amount information) generated in relation to the previous process from another information processing apparatus 100 corresponding to the previous process of the own process. The information acquisition section 131 supplies the acquired certification information to the certification information generation section 132. The information acquisition section 131 may provide the acquired certification information to the certification information generation section 132 via the storage portion 120.

The certification information generation section 132 recognizes the total emission amount of CO2 generated in the process prior to the own process based on the certification information of the previous process. The certification information generation section 132 calculates the total CO2 emission amount in the process (including the own process) in and before the own process by adding the CO2 emission amount in the own process to the total emission amount of CO2 in the process (not including the own process) before the own process. The certification information generation section 132 generates certification information for linking the calculated total CO2 emission amount in and before the own process to the subsequent process and supplies the generated certification information to the information provision section 133. The certification information generation section 132 generates the certification information of the own process as a verifiable credential. The certification information generation section 132 may provide the generated certification information to the information provision section 133 via the storage portion 120.

The information provision section 133 transmits the certification information generated by the certification information generation section 132 to another information processing apparatus 100 corresponding to the subsequent process.

Regarding a product manufacturing process having a plurality of processes, the information processing apparatus 100 having the configuration described above is provided corresponding to each process, and thereby, the CO2 emission amount in each process can be sequentially integrated in a similar procedure and be linked to the subsequent process. Therefore, according to the information processing system 1 of the embodiment, with respect to the manufacturing process of manufacturing a product by a series of processes having a before-and-after relationship, it becomes possible to generate, with less labor, the information for certifying that each process is performed based on an actual result of each previous process.

Further, according to the information processing apparatus 100 of the embodiment, since the emission amount of CO2 generated in each process of the product manufacturing process is sequentially integrated and transmitted to the subsequent process, it is possible to enhance the confidentiality of the CO2 emission amount of each process among the manufacturers corresponding to respective processes. Further, according to the information processing apparatus 100 of the embodiment, by generating the certification information of the CO2 emission amount as the verifiable credential, the product manufacturer can certify, for a third party, that the certification information indicates a correctly calculated CO2 emission amount without falsification.

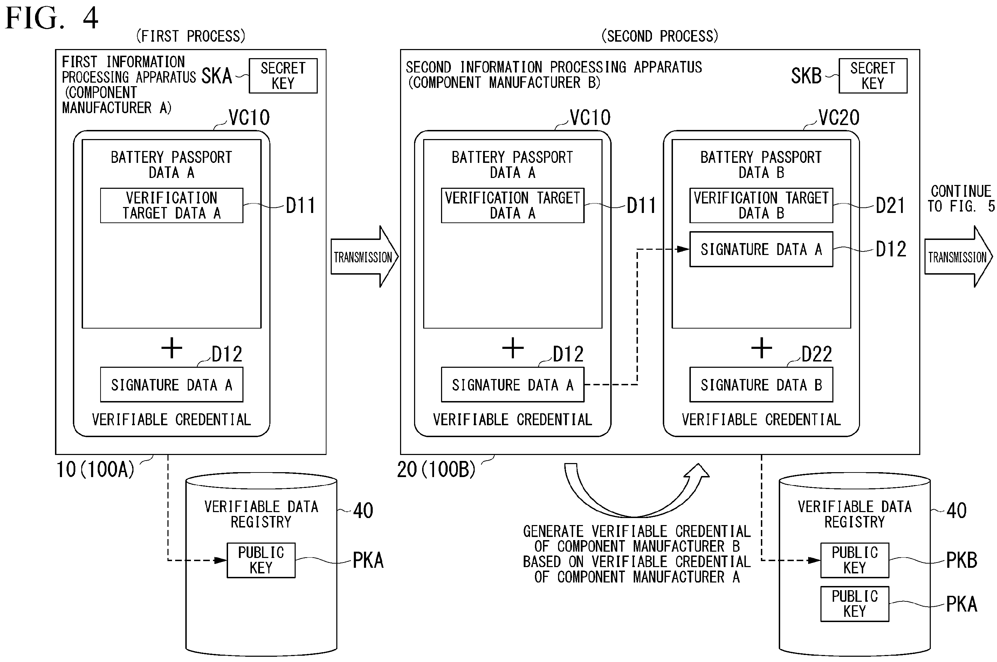

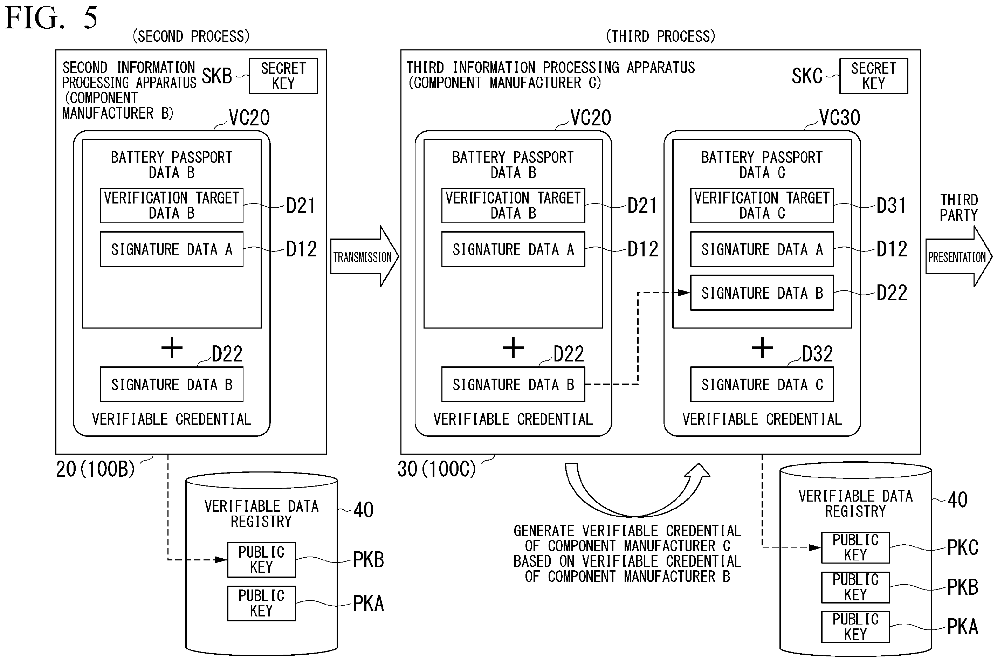

FIG. 4 and FIG. 5 are views showing an image representing the way in which a plurality of component manufacturers link the CO2 emission amount of the own process to the subsequent process while including battery passport data in the certification information to be linked, and thereby, a total emission amount of CO2 in the product manufacturing is linked to a final manufacturer C. First, a component manufacturer A manufactures a first component in a first process. The component manufacturer A supplies the manufactured first component to a component manufacturer B. Further, in response to this, the first information processing apparatus 10 corresponding to the first process acquires the CO2 emission amount in the first process from the component manufacturer A and generates certification information (first emission amount information) of the acquired CO2 emission amount. Since a previous process is not present in the first process, the first information processing apparatus 10 generates certification information in which the CO2 emission amount in the first process is the total emission amount and supplies the generated certification information to the second information processing apparatus 20 corresponding to the second process.

More specifically, the first information processing apparatus 10 generates, as the certification information, a verifiable credential VC10 that includes verification target data D11 indicating the CO2 emission amount in the first process and signature data D12 of the verification target data D11. For example, the first information processing apparatus 10 calculates a hash value of the verification target data D11 and generates the signature data D12 by encrypting the hash value with a secret key SKA of the component manufacturer A. The first information processing apparatus 10 registers, in the verifiable data registry 40, a public key PKA corresponding to the secret key SKA in association with a DID of the component manufacturer A.

Subsequently, in a second process, the component manufacturer B manufactures a second component by using the first component manufactured in the first process. The component manufacturer B supplies the manufactured second component to the final manufacturer C. Further, in response to this, the second information processing apparatus 20 corresponding to the second process acquires the CO2 emission amount in the second process from the component manufacturer B and generates certification information (second emission amount information) of the acquired CO2 emission amount. Here, first, the second information processing apparatus 20 recognizes the CO2 emission amount in the first process on the basis of the verifiable credential VC10 supplied from the first information processing apparatus 10. The second information processing apparatus 20 generates certification information having a total emission amount obtained by adding the CO2 emission amount in the second process to the CO2 emission amount in the first process and supplies the generated certification information to the third information processing apparatus 30 corresponding to the third process.

When the component manufacturer B has acquired or can acquire the DID of the component manufacturer A, the component manufacturer B can acquire the public key PKA from the verifiable data registry 40 by using the DID. The DID of the component manufacturer A may be included in the verifiable credential VC10 and supplied to the component manufacturer B or may be shared among the vendors by some means in advance. In this case, the second information processing apparatus 20 may verify the verification target data D11 by using the signature data D12 included in the verifiable credential VC10 when generating the certification information. Further, in this case, the second information processing apparatus 20 may be configured to generate the certification information after confirming that the verification target data D11 is not falsified. In this way, the information processing apparatus 100 (here, the information processing apparatus 100B) that receives the provision of the verifiable credential from the information processing apparatus 100 (here, the information processing apparatus 100A) of the previous process may be configured to verify the acquired verifiable credential. Further, the information processing apparatus 100 may be configured to generate the verifiable credential to be supplied to the information processing apparatus 100 (here, the information processing apparatus 100C) of the subsequent process when the validity of the verifiable credential provided from the previous process is confirmed as a result of the verification.

More specifically, the second information processing apparatus 20 generates, as the certification information, a verifiable credential VC20 that includes verification target data D21 indicating the CO2 emission amount up to the second process, signature data D22 of the verification target data D21, and the signature data D12 included in the verifiable credential VC10 linked from the first process. For example, the second information processing apparatus 20 calculates a hash value of the verification target data D21 and generates the signature data D22 by encrypting the hash value with a secret key SKB of the component manufacturer B. The second information processing apparatus 20 registers, in the verifiable data registry 40, a public key PKB corresponding to the secret key SKB in association with a DID of the component manufacturer B.

Subsequently, in a third process, the final manufacturer C manufactures a final product by using the second component manufactured in the second process. The manufactured final product may be sold by the final manufacturer C or may be shipped to a wholesaler or the like different from the manufacturer. Further, in response to this, the third information processing apparatus 30 corresponding to the third process acquires the CO2 emission amount in the third process from the final manufacturer C and generates certification information (CO2 emission amount information) of the acquired CO2 emission amount. Here, first, the third information processing apparatus 30 recognizes the CO2 emission amount up to the second process on the basis of the verifiable credential VC20 supplied from the second information processing apparatus 20. The third information processing apparatus 30 generates certification information having a total emission amount obtained by adding the CO2 emission amount in the third process to the CO2 emission amount up to the second process and provides the generated certification information to a third party such as an auditor. The third information processing apparatus 30 may verify the verification target data D21 by using the signature data D22 included in the verifiable credential VC20 when generating the certification information. In this case, the third information processing apparatus 30 may be configured to generate the certification information after confirming that the verification target data D21 is not falsified.

More specifically, the third information processing apparatus 30 generates, as the certification information, a verifiable credential VC30 that includes verification target data D31 indicating the CO2 emission amount up to the third process (that is, the total CO2 emission amount in the manufacturing process of a target product), signature data D32 of the verification target data D31, and the signature data D12 and D22 included in verifiable credential VC20 linked from the second process. For example, the third information processing apparatus 30 calculates a hash value of the verification target data D31 and generates the signature data D32 by encrypting the hash value with a secret key SKC of the final manufacturer C. The third information processing apparatus 30 registers, in the verifiable data registry 40, the public key PKC corresponding to the secret key SKC in association with a DID of the final manufacturer C.

A third party can recognize the CO2 emission amount in the manufacturing process of the target product on the basis of the verifiable credential VC30 provided from the final manufacturer C.

By providing such a verifiable credential VC30, the final manufacturer C can disclose the emission amount of CO2 generated in the manufacturing process of the target product to a third party and can certify, for the third party, that the disclosed CO2 emission amount is correctly calculated.

Further, the third party can understand the amount of CO2 emitted in the manufacturing process of the target product by the verifiable credential VC30 provided from the final manufacturer C and can confirm the validity of the CO2 emission amount disclosed by the final manufacturer C by verifying the verifiable credential VC30.

More specifically, the third party first acquires the public key PKC of the final manufacturer C from the verifiable data registry 40 on the basis of the DID of the final manufacturer C. The third party decrypts the signature data D32 included in the verifiable credential VC30 by using the public key PKC and calculates a hash value of the verification target data D31 included in the verifiable credential VC30. The third party can verify the validity (that is, there is no falsification) of the verifiable credential VC30 by comparing the hash value obtained by decrypting the signature data D32 with the hash value acquired from the verification target data D31 and confirming that the two values match each other.

Further, the third party can confirm that the CO2 emission amount of each process is correctly integrated by inquiring the manufacturer of each process about the CO2 emission amount in the corresponding process, calculating the hash value, and confirming that each calculated hash value matches each hash value obtained by decrypting each signature data included in the verifiable credential V30. The third party can acquire the public key of each manufacturer from the verifiable data registry 40 on the basis of the DID of the manufacturer of each process.

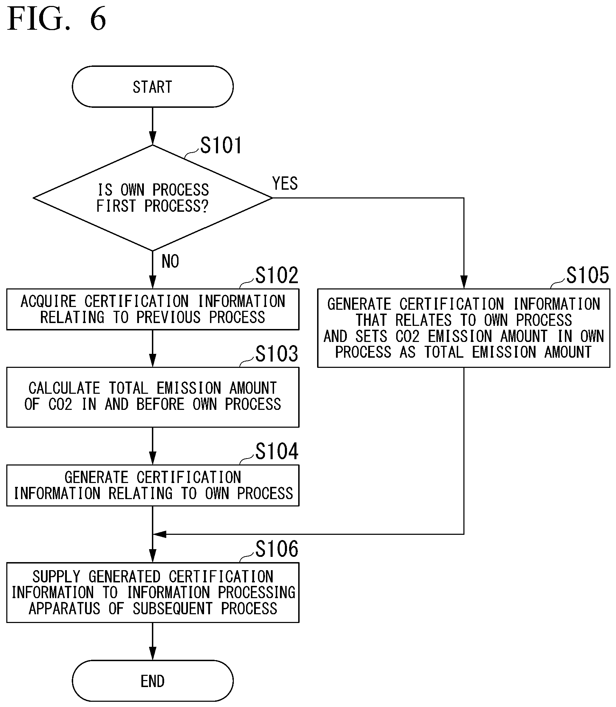

FIG. 6 is a flowchart showing an example of a flow of process in which the information processing apparatus 100 of the present embodiment generates the certification information with respect to the corresponding manufacturing process. The information processing apparatus 100 is configured to execute such a flow and can thereby generate the certification information in a similar procedure with respect to each process of the product manufacturing process.

First, the information processing apparatus 100 determines whether or not the information processing apparatus 100 corresponds to the first process of the product manufacturing process (S101). Here, for example, it is assumed that setting information indicating that the information processing apparatus 100 corresponds to a process among the respective processes in the product manufacturing process is registered in advance in the storage portion 120 of the information processing apparatus 100. In this case, the information processing apparatus 100 can determine whether or not the information processing apparatus 100 corresponds to the first process by referring to the setting information.

In S101, when it is determined that the information processing apparatus 100 does not correspond to the first process, the information processing apparatus 100 acquires certification information relating to the previous process from the information processing apparatus 100 corresponding to the previous process of the own process (S102). The information processing apparatus 100 recognizes the total emission amount of CO2 in and before the previous process on the basis of the acquired certification information and calculates the total emission amount of CO2 in and before the own process by adding the CO2 emission amount in the own process to the value of the recognized total emission amount (S103). The information processing apparatus 100 generates certification information for linking the total CO2 emission amount calculated in S103 to the subsequent process (S104).

On the other hand, in S101, when it is determined that the information processing apparatus 100 corresponds to the first process, since there is no manufacturing process prior to the own process, the information processing apparatus 100 generates certification information for linking to the subsequent process and setting the CO2 emission amount in the own process as the total emission amount (S105).

The information processing apparatus 100 supplies the certification information generated in S104 or S105 to another information processing apparatus 100 corresponding to the subsequent process of the own process (S106).

The information processing apparatus 100 configured in this way is provided in association with each process of the product manufacturing process, and thereby, the CO2 emission amount in the first process and each process after the first process is integrated and linked to the final manufacturer. Therefore, it becomes unnecessary for the final manufacturer to collect the CO2 emission amount with respect to the manufacturing process prior to the final process, and therefore, the burden on the final manufacturer is reduced.

Further, the information processing apparatus 100 generates, as the certification information, a verifiable credential that includes the verification target data and the signature data of the verification target data, and thereby, the final manufacturer can disclose the CO2 emission amount in the manufacturing process of the target product and provide a means for verifying that the disclosed information of the CO2 emission amount with respect to the target product is not falsified for a third party acquiring the certification information.

According to the information processing system 1 of the embodiment described above, with respect to the manufacturing process of manufacturing a product by a plurality of processes, it becomes possible to generate, with less labor, the information for certifying that each process is performed based on an actual result of each previous process.

For example, one of the international standards relating to batteries is the battery passport. The battery passport is an effort to ensure transparency of information disclosure relating to a battery. Here, when the battery is manufactured in a manufacturing process having a hierarchical structure in which a component is generated by using a component supplied from a manufacturer of the previous process and the generated component is supplied to a manufacturer of the subsequent process, in order to comply with the battery passport, it is necessary for the manufacturer of the battery to certify (hereinafter, referred to as an "emission amount certification") that own emission amount data is created by using the emission amount data supplied from the previous process as it is. However, conventionally, the method and means for realizing such an emission amount certification is mostly entrusted to each company, and the operation is complicated. The information processing system 1 of the embodiment also contributes to providing a standardization method for the operation of the battery passport, which has been conventionally complicated.

The above embodiment is described using the case in which it is assumed that the information processing apparatus 100 is provided for each manufacturer, and each of the first information processing apparatus 10, the second information processing apparatus 20, and the third information processing apparatus 30 is configured as a separate body; however, the first information processing apparatus 10, the second information processing apparatus 20, and the third information processing apparatus 30 may be integrally configured. Further, the above embodiment is described using the case in which the information processing system 1 includes the verifiable data registry 40; however, the verifiable data registry 40 is not necessarily included in the information processing system 1. For example, the information processing system 1 may realize the verifiable data registry 40 by using an external service such as a cloud service.

The embodiment described above can be represented as follows.

A manufacturing process management system which is a system that manages manufacturing processes by a plurality of manufacturers, including
one or more computers including a plurality of information processing portions corresponding to the plurality of manufacturers,
wherein each of the one or more computers includes
   a storage medium that stores computer-readable instructions, and
   a processor connected to the storage medium, and
the processor executes the computer-readable instructions to:
   generate first data relating to a specification of a component manufactured by a corresponding manufacturer,
   generate second data by encrypting the first data with a secret key of the manufacturer,
   generate verification data including the first data, the second data, and a decentralized identifier of the manufacturer, supply the verification data to an information processing portion of a next manufacturing process, and
   provide the verification data supplied from an information processing portion of a previous manufacturing process to a third party.

Although modes for carrying out the present invention have been described using the embodiment, the present invention is not limited to the embodiment, and various modifications and substitutions can be made without departing from the scope of the present invention.

### DESCRIPTION OF REFERENCE SYMBOLS

1 Information processing system
10 First information processing apparatus
20 Second information processing apparatus
30 Third information processing apparatus
40 Verifiable data registry
100 Information processing apparatus
110 Communication portion
120 Storage portion
130 Information processing portion
131 Information acquisition section
132 Certification information generation section
133 Information provision section

## Claims

1. A manufacturing process management system which is a system that manages manufacturing processes by a plurality of manufacturers, the manufacturing process management system comprising
a plurality of information processing portions corresponding to the plurality of manufacturers,
wherein each of the plurality of information processing portions
generates first data relating to a specification of a component manufactured by a corresponding manufacturer,
generates second data by encrypting the first data with a secret key of the manufacturer,
generates verification data including the first data, the second data, and a decentralized identifier of the manufacturer, supplies the verification data to an information processing portion of a next manufacturing process, and
is capable of providing the verification data supplied from an information processing portion of a previous manufacturing process to a third party.

2. The manufacturing process management system according to claim 1,
wherein when the verification data is supplied from the previous manufacturing process, each of the plurality of information processing portions generates verification data relating to an own manufacturing process based on the first data included in the verification data.

3. The manufacturing process management system according to claim 2,
wherein when generating the verification data relating to the own manufacturing process, each of the plurality of information processing portions causes the second data included in the verification data supplied from the previous manufacturing process to be included in the first data of the verification data generated relating to the own manufacturing process.

4. The manufacturing process management system according to claim 1,
wherein each of the plurality of information processing portions generates the second data by encrypting a hash value obtained by hashing the first data with the secret key.

5. The manufacturing process management system according to claim 1,
wherein the first data is a value relating to an environmental load generated by manufacturing the component.

6. The manufacturing process management system according to claim 1,
wherein the verification data is used as management information of a battery passport which is an effort to ensure transparency of information disclosure relating to a battery, and
the first data indicates an integration value of carbon dioxide emission amounts of respective processes in a manufacturing process of the battery.

7. A manufacturing process management method which is a method of managing manufacturing processes by a plurality of manufacturers,
wherein in a manufacturing process management system comprising a plurality of information processing portions corresponding to the plurality of manufacturers,
each of the plurality of information processing portions
generates first data relating to a specification of a component manufactured by a corresponding manufacturer,
generates second data by encrypting the first data with a secret key of the manufacturer,
generates verification data including the first data, the second data, and a decentralized identifier of the manufacturer, supplies the verification data to an information processing portion of a next manufacturing process, and
provides the verification data supplied from an information processing portion of a previous manufacturing process to a third party.

8. A program in a manufacturing process management system which is a system that manages manufacturing processes by a plurality of manufacturers and comprises a plurality of information processing portions corresponding to the plurality of manufacturers, the program causing
each of the plurality of information processing portions to
generate first data relating to a specification of a component manufactured by a corresponding manufacturer,
generate second data by encrypting the first data with a secret key of the manufacturer,
generate verification data including the first data, the second data, and a decentralized identifier of the manufacturer, supply the verification data to an information processing portion of a next manufacturing process, and
provide the verification data supplied from an information processing portion of a previous manufacturing process to a third party.

## Amended claims

### Amended claims under Art. 19.1 PCT

**1.** A manufacturing process management system which is a system that relates a battery manufactured by a plurality of processes and manages carbon dioxide emission amounts in the plurality of processes by a battery passport, the manufacturing process management system comprising
a plurality of information processing portions corresponding to the plurality of processes,
wherein a first information processing portion corresponding to a first process generates a first verifiable credential including first verification target data indicating a carbon dioxide emission amount in the first process and signature data of the first verification target data and supplies the first verifiable credential as certification information to a second information processing portion corresponding to a second process, and
the second information processing portion acquires the carbon dioxide emission amount in the first process based on the first verifiable credential, generates a second verifiable credential including second verification target data indicating a total emission amount obtained by adding the carbon dioxide emission amount in the first process to a carbon dioxide emission amount in the second process and signature data of the second verification target data, and supplies the second verifiable credential as the certification information to a subsequent process.

**2.** Cancelled)

**3.** Cancelled)

**4.** The manufacturing process management system according to claim 1,
wherein the first information processing portion generates signature data by encrypting a hash value obtained by hashing the first verification target data with a first secret key corresponding to the first process, and
the second information processing portion generates signature data by encrypting a hash value obtained by hashing the second verification target data with a second secret key corresponding to the second process.

**5.** Cancelled)

**6.** Cancelled)

**7.** A manufacturing process management method which is a method that relates a battery manufactured by a plurality of processes and manages carbon dioxide emission amounts in the plurality of processes by a battery passport,
wherein among a plurality of information processing portions corresponding to the plurality of processes, a first information processing portion corresponding to a first process generates a first verifiable credential including first verification target data indicating a carbon dioxide emission amount in the first process and signature data of the first verification target data and supplies the first verifiable credential as certification information to a second information processing portion corresponding to a second process, and
the second information processing portion acquires the carbon dioxide emission amount in the first process based on the first verifiable credential, generates a second verifiable credential including second verification target data indicating a total emission amount obtained by adding the carbon dioxide emission amount in the first process to a carbon dioxide emission amount in the second process and signature data of the second verification target data, and supplies the second verifiable credential as the certification information to a subsequent process.

**8.** A program that relates a battery manufactured by a plurality of processes and manages carbon dioxide emission amounts in the plurality of processes by a battery passport,
wherein the program causes a first information processing portion corresponding to a first process among a plurality of information processing portions corresponding to the plurality of processes to generate a first verifiable credential including first verification target data indicating a carbon dioxide emission amount in the first process and signature data of the first verification target data and supply the first verifiable credential as certification information to a second information processing portion corresponding to a second process, and
the program causes the second information processing portion to acquire the carbon dioxide emission amount in the first process based on the first verifiable credential, generate a second verifiable credential including second verification target data indicating a total emission amount obtained by adding the carbon dioxide emission amount in the first process to a carbon dioxide emission amount in the second process and signature data of the second verification target data, and supply the second verifiable credential as the certification information to a subsequent process.

**9.** The manufacturing process management system according to claim 4, further comprising
a verifiable data registry that stores a public key corresponding to a secret key in association with a decentralized identifier,
wherein the first information processing portion stores a first public key corresponding to the first secret key in the verifiable data registry, and
the second information processing portion stores a second public key corresponding to the second secret key in the verifiable data registry in which the first public key is stored.

**10.** The manufacturing process management system according to claim 1,
wherein the second information processing portion acquires a first total emission amount of carbon dioxide in a process prior to an own process based on a verifiable credential supplied from an information processing portion of a previous process, generates a second verifiable credential including a second verification target data indicating a second total emission amount obtained by adding a carbon dioxide emission amount in an own process to a carbon dioxide emission amount in the process prior to the own process and signature data of the second verification target data, and supplies the second verifiable credential as the certification information to the subsequent process.

Statement under Art. 19.1 PCT
In claim 1, amendments were made for the purpose of distinguishing a process of "a plurality of information processing portions" into a process by "a first information processing portion corresponding to a first process" and a process by "a second information processing portion corresponding to a second process". The amendments in claim 1 are based on the descriptions of paragraphs [0043] to [0045] of the specification and FIG. 6 of the present application.

Claims 2, 3, 5, and 6 were cancelled.

Amendments were made to claim 4 for the purpose of causing claim 4 to conform to amended claim 1.

In claims 7 and 8, amendments were made for the same purpose as claim 1.

Claim 9 was added. Claim 9 is based on the descriptions of paragraph [0046] of the specification and FIG. 5 of the present application.

Claim 10 was added. Claim 10 is based on the descriptions of paragraphs [0030] to [0031] and [0038] of the specification and FIG. 6 of the present application.
